# EUROPÄISCHE PATENTANMELDUNG

(11) **EP 1 060 778 A1**
(43) Veröffentlichungstag der Anmeldung: **20.12.2000**
(21) Anmeldenummer: 00108025.8
(22) Anmeldetag: 20.04.2000
(51) Int. Cl.: B01D 19/04, C11D 3/00, C11D 3/37

(54) **Entschäumerpulver**

(30) Priorität: 21.05.1999 DE 19923432
(71) Anmelder: Wacker-Chemie GmbH, 81737 München (DE)
(72) Erfinder: Spitzner, Hartmut, Dr., 01277 Dresden (DE); Rautschek, Holger, Dr., 01612 Nünchritz (DE); Wolf, Christine, 01619 Bobersen (DE)
(74) Vertreter: Fritz, Helmut, Dr.

(57) **Zusammenfassung**

Die Erfindung betrifft Entschäumerpulver, welche neben einer Entschäumerformulierung, Füllstoff und pulverförmigem Trägermaterial mindestens ein lineares und/oder verzweigtes Vinylpolymer enthalten und insbesondere in festen Wasch- und Reinigungsmitteln Verwendung finden.

## Beschreibung

Die Erfindung betrifft Entschäumerpulver, welche neben einer Entschäumerformulierung, Füllstoff und pulverförmigem Trägermaterial mindestens ein lineares und/oder verzweigtes Vinylpolymer enthalten und insbesondere in festen Wasch- und Reinigungsmitteln Verwendung finden.

In einer Reihe von flüssigen, insbesondere wäßrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, wie beispielsweise beim Begasen von Abwässern, beim intensiven Rühren von Flüssigkeiten, bei Destillations-, Wasch- oder Färbeprozessen oder bei Abfüllvorgängen. Die Bekämpfung entstehenden Schaums kann auf mechanischem Wege erfolgen. Im allgemeinen wird entstehender Schaum aber durch den Zusatz von Entschäumern kontrolliert.

In vor der Anwendung festen Produkten, wie beispielsweise in Wasch- und Reinigungsmitteln, in agrochemischen Erzeugnissen und in pharmazeutischen Formulierungen werden vorrangig pulverförmige Entschäumer verwendet. Dabei ist es günstig, die normalerweise als ölartige, viskose Flüssigkeiten vorliegenden Entschäumer in Pulverform zu überführen. Das kann durch Adsorption des Entschäumers an feste Träger, wie z. B. an Aluminiumoxid (DE 26 156 88), Methylkieselsäure (BE 854 468) oder auch an Baumwolle, Holzmehl (EP 593 544) oder andere cellulosehaltige Materialien (EP 336 710) erfolgen. Von besonderem Vorteil ist es dabei, wenn die eingesetzten Trägermaterialien den Waschprozeß nicht behindern bzw. selbst Waschmittelbestandteile sind. Den meisten der durch einfaches Aufbringen der Entschäumer auf ein Trägermaterial erhaltenen Entschäumerpulver ist gemeinsam, dass sie, insbesondere in Gegenwart alkalisch wirkender Verbindungen, bei Lagerung schnell an Wirksamkeit verlieren.

Um diesen Nachteil entgegen zu wirken, wurden verschiedene Lösungen vorgeschlagen. Eine mögliche Lösung beinhaltet die Verkapselung bzw. Umhüllung des Trägermaterials mit dem Ziel der besseren Fixierung des Entschäumers. DE 34 36 194 schlägt zu diesem Zweck die Verwendung von Celluloseethern, EP 391 590 die Nutzung von Maltodextrinen, EP 517 298 von Stearylalkohol und DE 19726777 von modifizierten Polyurethanen vor. Weiterhin beschreiben EP 236 893 die Nutzung fester Paraffine und EP 187 266 die von Polyvinylalkohol. Weitere Möglichkeiten der Fixierung des Entschäumers besteht in der Verwendung von Trägermaterialien mit einer definierten Porengröße (EP 266863, EP 342 985) oder in speziell und aufwendig gestalteten Herstellungsverfahren (u. a. DE 41 08 286, DE 41 17 032, EP 484 081).

DE 4325881 beschreibt die Herstellung von Entschäumergranulat durch strangförmiges Verpressen eines homogenen Vorgemischs aus Alkalicarbonat und Entschäumer, wobei als Plastifizierungshilfsmittel Polyethylenglycol, Glucose oder Saccharose zugesetzt werden. Dabei ist es auch möglich, polymere Polycarboxylate, wie Polyacrylate bzw. Mischpolymerisate aus Acrylsäure und Maleinsäure, als Trägermaterial zu benutzen.

Der Nachteil der beschriebenen Lösungen besteht in den zum Teil erheblichen Mengen der zusätzlich benötigten organischen Komponenten, die in den meisten Fällen selbst nicht waschaktiv sind und somit eine überflüssige Belastung darstellen. Die unter Zusatz großer Mengen organischer Komponenten hergestellten Entschäumerpulver weisen oftmals eine schlechte Wirksamkeit aufgrund der verzögerten Freisetzung des Entschäumeröls in die Waschflotte auf.

Aufgabe der Erfindung war es daher, Entschäumerpulver vorzuschlagen, welche neben Entschäumerformulierung und Trägermaterial nur geringe Mengen zusätzlicher Bestandteile enthalten und eine hervorragende Lagerstabilität aufweisen. Insbesondere sollen die hergestellten Entschäumerpulver in Wasch- und Reinigungsmitteln oder in Pflanzenschutzmitteln verwendbar sein.

Gegenstand der Erfindung sind Entschäumerpulver, enthaltend mindestens
(A) 2 bis 30 Gew.-Teile einer Entschäumerformulierung, bestehend aus mindestens einem in Wasser unlöslichem Entschäumeröl und mindestens einem Füllstoff,
(B) 50 bis 100 Gew.-Teile mindestens eines pulverförmigem Trägermaterials sowie
(C) 0,1 bis 30 Gew.-Teile
mindestens eines linearen Vinylpolymers der allgemeinen Formel

R¹-(CR₂-CR₂)ₙ-R¹ (I),

worin R¹ unabhängig voneinander entweder Wasserstoff oder ein durch thermische oder photochemische Startreaktionen aus dem Initiator gebildetes Startradikal darstellt und R ausgewählt ist aus Wasserstoff, Kohlenwasserstoffresten mit 1 bis 30 Kohlenstoffatomen, Carboxylgruppen oder deren Salzen, Gruppierungen der allgemeinen Formel

-C(O)-O-R² (II),

-C(O)-N-R³ ₂ (III),

-O-C(O)-R² (IV),

oder zwei benachbarte Kohlenstoffatome verbindende Gruppierungen der allgemeinen Formel

-C(O)-O-C(O)- (V)

oder

-C(O)-NR³-C(O)- (VI),

wobei R² einen Kohlenwasserstoffrest mit 1 bis 30 Kohlenstoffatomen darstellt und R³ entweder Wasserstoff oder R² bedeutet, mit der Maßgabe, dass mindestens 5 Mol.-% der Reste R Carboxylgruppen oder deren Salze sind und mindestens 0,1 Mol.-% der Reste R Kohlenwasserstoffreste mit mehr als 8 Kohlenstoffatomen oder Gruppierungen der allgemeinen Formel (II), (III) oder (IV) sind, bei denen R² einen Kohlenwasserstoffrest mit mehr als 8 Kohlenstoffatomen darstellt, wobei n einen Wert zwischen 10 und 100.000 annimmt,
und/oder
mindestens eines verzweigten Vinylpolymeren, dessen lineare Ketten der allgemeinen Formel (I) entsprechen, die über den Einbau von Vinylmonomeren, welche mindestens 2 ungesättigte, radikalisch polymerisierbare Gruppen tragen, verknüpft sind.

Beispielsweise kann als lineares Vinylpolymer (C) mindestens eine Verbindung der allgemeinen Formel (I) eingesetzt werden, worin als Reste R
20 bis 40 Mol.-% Carboxylgruppen oder deren Salze,
0,1 bis 10 Mol.-% Reste der Formel (II) mit der Maßgabe, dass R² Alkylreste mit 10 bis 30 Kohlenstoffatomen darstellt,
bis zu 25 Mol.-% Methylgruppen und
mehr als 50 Mol.-% Wasserstoff gebunden sind
sowie n einen Wert zwischen 5.000 und 50.000 annimmt.

Weiterhin möglich ist die Verwendung eines linearen Vinylpolymers (C) der allgemeinen Formel (I), worin als Reste R
24 bis 30 Mol.-% Carboxylgruppen oder deren Salze sind,
0,1 bis 1,5 Mol.-% Reste der Formel (II) mit der Maßgabe, dass R² Alkylreste mit 1 bis 18 Kohlenstoffatomen darstellt,
bis zu 25 Mol.-% Methylgruppen und
mehr als 50 Mol.-% Wasserstoff gebunden sind
sowie n einen Wert zwischen 5.000 und 50.000 annimmt.

Als verzweigtes Vinylpolymer (C) wird vorzugsweise mindestens eine Verbindung eingesetzt, in welcher die linearen Ketten der allgemeinen Formel (I) entsprechen und durch den Einbau von Monomeren, ausgewählt aus Allylethern, Acrylestern und/oder Methacrylestern von mehrwertigen Alkoholen, insbesondere von Kohlenhydraten, verknüpft sind. Bevorzugt sind die linearen Ketten der allgemeinen Formel (I) durch den Einbau von Monomeren der allgemeinen Formel

(R⁴OCH₂)₃CR⁵ (VII)

verknüpft, wobei R⁴ Wasserstoff und/oder eine Gruppierung -CH₂CH=CH₂, -C(O)-CH=CH₂ und/oder -C(O)-C(CH₃)=CH₂ darstellt und R⁵ entweder einen Kohlenwasserstoffrest mit 1 bis 4 Kohlenstoffen oder eine Gruppierung -CH₂OR⁴, mit der Maßgabe bedeutet, dass mindestens zwei ungesättigte Gruppen pro Verbindung der allgemeinen Formel (VII) enthalten sind.

Üblicherweise sind 5 bis 20 Teile Vinylpolymer (C) je 100 Teile Entschäumerformulierung (A) im Entschäumerpulver enthalten.

Als Entschäumerformulierung (A) wird eine Formulierung auf der Basis eines wasserunlöslichen Entschäumeröles mit weiteren Hilfsstoffen, wie fein verteilten hydrophoben Feststoffen, verwendet.

Als Entschäumeröl, welches in der Entschäumerformulierung (A) enthalten ist, kommen bevorzugt Polymere und/oder Copolymere auf Basis von Diorganopolysiloxanen, Mineralöle, Fettsäuren und deren Derivate, langkettige Alkohole oder Ethylenoxid-Propylenoxid-Blockcopolymere oder deren Mischungen zum Einsatz.

Als hydrophobe Feststoffe, die die Entschäumerwirkung bekannterweise unterstützen, können z.B. Wachspartikel, hydrophobe z. B. in situ erzeugte Polyurethane, hydrophobierte Silikate, hydrophobiertes Quarzmehl, Fettsäureamide, Bisamide und hydrophobierte Kieselsäuren verwendet werden.

Als Entschäumerformulierung (A) wird vorzugsweise eine Mischung aus 85 bis 99 Gew.-% linearen und/oder verzweigten Organopolysiloxanen mit einer kinematischen Viskosität von 100 bis 1.000.000 mm²/s und 1 bis 15 Gew.-% einer vorbehandelten und/oder in situ hydrophobierten Kieselsäure mit einer BET Oberfläche größer 50 m²/g verwendet.

Als Trägermaterial (B) werden üblicherweise wasserlösliche und/oder wasserdispergierbare, organische und/oder anorganische pulverförmige Substanzen eingesetzt.

Wesentlich für die erfindungsgemäßen Entschäumerpulver ist die Verwendung mindestens eines Vinylpolymers (C), wobei ein Gehalt von 1 bis 100 Gew.-Teilen, insbesondere von 2 bis 20 Gew.-Teilen je 100 Teilen der verwendeten Entschäumerformulierung bevorzugt ist.

Üblicherweise sind die verwendeten Vinylpolymere (C) wasserlöslich oder wasserdispergierbar und weisen aufgrund der enthaltenen Carboxylgruppen einen pH-Wert kleiner 7 auf. Die Viskosität einer mit Natronlauge neutralisierten 2%-igen, wässrigen Lösung beträgt beispielsweise 200 mm²/s bis 200.000 mm²/s, vorzugsweise 2.000 bis 70.000 mm²/s.

Die Art der Reste R in Formel (I) hängt von der Art der zur Herstellung der Vinylpolymere verwendeten Monomere ab. Beispiele für bevorzugte Monomerbausteine, die das Vinylpolymer (C) der allgemeinen Formel (I) bilden sind:

-CH₂-CR⁶(CH₃)- (VIII)

-CH₂-CR⁶(C₂H₅)- (IX)

-CH₂-CHR⁶- (X)

-CHR⁶-CHR⁶- (XI)

wobei R⁶ vorzugsweise ausgewählt ist aus den Gruppierungen

-C(O)-O-H (XII),

-C(O)-O-R² (II)

und/oder

-C(O)-N-R³ ₂, (III).

Dabei bedeuten, wie oben angegeben, R² einen Kohlenwasserstoffrest mit 1 bis 30 Kohlenstoffatomen und R³ entweder Wasserstoff oder R². Die Carboxylgruppe (XII) kann auch durch Basen, vorzugsweise Basen mit einem einfach positiv geladenen Kation, wie z. B. Alkalikationen oder Ammoniumkationen, ganz oder teilweise neutralisiert sein. Vorzugsweise tragen in den für die Herstellung der erfindungsgemäßen Entschäumerpulver eingesetzten Vinylpolymeren mehr als 80% der Monomerbausteine der allgemeinen Formeln (VIII), (IX), (X) und (XI) als Rest R⁶ mindestens eine Carboxylgruppe oder deren Salze.
Die Reste R² können gleiche oder verschiedene monovalente Alkyl-, Aryl-, Aralkyl- und cycloaliphatische Kohlenwasserstoffreste sein. Bevorzugt sind lineare oder verzweigte monovalente Alkylreste mit 8 bis 30 Kohlenstoffatomen. Es ist bevorzugt, dass in den Vinylpolymeren 0,5 bis 2,5 Mol.-% der Monomerbausteine der allgemeinen Formeln (VIII), (IX), (X) und (XI) als Rest R² mindestens einen geradkettigen oder verzweigten Alkylreste mit 10 bis 30 Kohlenstoffatomen tragen. Dabei sind sind Alkylreste mit 12 bis 22 Kohlenstoffatomen, insbesondere mit 18 Kohlenstoffatomen, besonders bevorzugt. Beispiele für Reste R² sind Heptyl-, Octyl-, 2-Ethylhexyl, Decyl-, Isodecyl-, Dodecyl-, Lauryl-, Myristyl- und Stearylreste.

Beispiele für Monomere, die zu diesen genannten Strukturen führen sind Acrylsäure, Methacrylsäure, Ethacrylsäure, Methylmethacrylat, Ethylacrylat, Butylacrylat, Butylmethacrylat, Acrylamid, Methacrylamid, Laurylacrylat, Laurylmethacrylat, Stearylacrylat und Stearylmethacrylat.

Dabei ist es z. B. bevorzugt, dass mindestens 80 Mol.-% der Monomere Acrylsäure oder Methacrylsäure sind.

Als Monomere sind auch Maleinsäureanhydrid oder Maleinsäureimid einsetzbar. In diesem Fall ist es bevorzugt, dass die eingebauten Anhydrid- oder Imidgruppen ganz oder teilweise mit Wasser, Alkoholen, Aminen oder Ammoniaklösung zu Carboxyl- Ester- und/oder Amidgruppen umgesetzt werden.

In den erfindungsgemäßen Entschäumerpulvern können auch verzweigte Vinylpolymere als Komponente (C) eingesetzt werden, wobei die linearen Ketten der allgemeinen Formel (I) entsprechen und durch den Einbau von Vinylmonomeren mit mindestens zwei ungesättigten Gruppen vernetzt sind. Beispiele für derartige Monomere sind, Diallylmaleat, Allylacrylat, Allylmethacrylat, Hexadien und Octadien. Vorzugsweise werden als Monomere mit mindestens zwei ungesättigten Gruppen Monomere, ausgewählt aus Allylethern, Acrylestern und/oder Methacrylestern mehrwertiger Alkohole, eingesetzt, wie Allylether, Acrylester und Methacrylester von Ethylenglycol, Pentaerythritol, Saccharose, 1,1,1-Trimethylolethan und von 1,1,1-Trimethylolpropan sowie von Polyetherdiolen. Beispiele sind Pentaerythritdiacrylat, Pentaerythrittriacrylat, Pentaerytrittetraacrylat, Petaerythritdimethacrylat, Pentaerytriallylether und Saccharosetriallylether.

Die Reste R¹ in Formel (I) werden durch die Radikale, welche die Polymerisation starten oder die Ketten abbrechen, bestimmt. Im Fall von Kettenübertragungsreaktionen, die auch zu Verzweigungen führen können, ist R¹ = H. Im Allgemeinen hat der Rest R¹ keinen signifikanten Einfluss auf die Eigenschaften des Vinylpolymers, da der Anteil des Restes R¹ im Vergleich zu den anderen Resten im Polymer sehr gering ist. Deshalb ist die Auswahl des Initiators (womit der Rest R¹ festgelegt wird) für die Eigenschaften des als Komponente (C) eingesetzten Vinylpolymeren nur insofern von Bedeutung als damit eine effiziente Polymerisation der Monomere gestartet werden kann und die gewünschte Molmasse erreicht wird. Beispiele für R¹ sind HO-, (CH₃)₂(CN)C-, C₁₂H₂₅-O-, (CH₃)₃C-O-, C₆H₅-, C₆H₅-C(O)O-, C₆H₄Cl-, C₆H₄Cl-C(O)O-, C₆H₅-C(CH₃)₂-O-, HO-(C₆H₅)₂C-, C₆H₅-(O)C-, (C₆H₅)₂(OH)C-, CH₃(CH₃O)₂C-, CH₃O(CH₃)₂C-, C₆H₅(CH₃O)₂C-, CH₃O(CH₃)(C₆H₅)C-, und (CH₃)₂C-C₆H₄- Reste.

Beispiele für lineare und verzweigte Vinylpolymere sind polymere Umsetzungsprodukte von
- Acrylsäure und Acrylsäurestearylester,
- Acrylsäure, Stearylmethacrylat und Pentaerythrittriallylether,
- Methacrylsäure, Isodecylmethacrylat und Allylacrylat,
- Ethacrylsäure, Stearylacrylat und Allylsaccharose,
- Acrylsäure, Stearylmethacrylat und 1,1,1-Trimethylolpropandiallylether,
- Methacrylsäure, Laurylmethacrylat und Pentaerythrittriacrylat,
- Acrylsäure, Maleinsäureanhydrid, Isodecylmethacrylat und Ethylendiacrylat sowie
- Acrylsäure, 1-Octadecen und α, ω-Diallylpolyethylenglykol mit 12 Ethylenoxideinheiten.

Derartige und ähnliche Verbindungen (C), die im Rahmen der vorliegenden Erfindung eingesetzt werden können, sind bekannt und kommerziell erhältlich. Die Synthese dieser Verbindungen wird beispielsweise durch Polymerisation der Monomere in Gegenwart eines Radikalinitiators in geschlossenen Anlagen unter Inertgas, oder in offenen Anlagen unter Inertgas und Rückfluß unter Rühren durchgeführt. Dabei sind sowohl Batch- als auch kontinuierliche Herstellungsverfahren möglich. Die Reaktion findet in der Regel bei Temperaturen zwischen 5 und 130 °C statt. Typische freie Radikalinitiatoren sind Peroxide, wie z.B. Kaliumpersulfat, Dibenzoylperoxid, Laurylperoxid, Wasserstoffperoxid, aber auch andere Radikalbildner, wie z. B. α, α'-Azoisobutyronitril, können verwendet werden. In Gegenwart von Aminen kann die Effektivität der Peroxidinitiierung durch Redoxreaktionen noch gesteigert werden. Es ist weiterhin möglich, die notwendigen Radikale für die Initiierung der Polymerisation durch Bestrahlung mit UV-Licht in Abwesenheit oder in Gegenwart von bekannten Photoinitiatoren wie z.B. Benzoinethern oder Benzilketalen zu erzeugen. Die Polymerisationen werden üblicherweise in Abwesenheit von Sauerstoff und in einem inerten Lösemittel durchgeführt, das die Monomeren so gut wie möglich und die entstehenden Polymere so wenig wie möglich lösen sollte. Beispiele für geeignete Lösemittel sind Benzene, Chlorfluoralkane, Gemische organischer Lösemittel, z.B. Ester oder Ketone mit Kohlenwasserstoffen mit 4 bis 12 Kohlenstoffatomen oder nichtbenzenischer Aromaten mit 7 bis 9 Kohlenstoffatomen, aber auch kurzkettige lineare oder cyclische Dimethylsiloxane. Die Verfahren zur Polymerisation sind bekannt und z. B. in Makromoleküle Hüthig&Wepf Verlag Basel, Heidelberg, New York 1981, beschrieben.

Als Entschäumerformulierungen (A) können dem Fachmann bekannte oder auch kommerziell erhältliche Entschäumerformulierungen verwendet werden. Die geeigneten Entschäumerformulierungen enthalten mindestens ein in Wasser unlösliches Entschäumeröl und mindestens einen Füllstoff. Als Entschäumeröl können Mineralöle, Fette, Wachse, Paraffine, Fettalkohole, Fettsäureester, Siliconöle und andere bekannte wasserunlösliche Öle eingesetzt werden. Als Füllstoffe sind hydrophobe feinverteilte Substanzen bevorzugt, wie beispielsweise Polyurethanpulver, Fettsäuresalze mehrwertiger Kationen, Fettsäureamide und hydrophobierte gefällte oder pyrogene Kieselsäuren.

Als pulverförmiges Trägermaterial (B) können alle dafür bekannten Stoffe verwendet werden, insbesondere wasserlösliche und/oder wasserdispergierbare, organische und/oder anorganische pulverförmige Substanzen, wie Mono-, Di- und/oder Polysaccharide, Stärke, Stärkederivate, Harnstoff, leichte Soda, cellulosehaltige Materialien, Holzmehl, Polycarboxylate oder Alumosilicate, wie Zeolithe. Besonders bevorzugt sind dabei als pulverförmige Trägermaterialien (B) Bestandteile von Waschmittelformulierungen, wie Soda, Carboxymethylcellulosen, Cobuilder, wie beispielsweise Copolymere aus Acrylsäure und Maleinsäure.

Als weitere Komponenten können die erfindungsgemäßen Entschäumerpulver bekannte Zusätze, wie z. B. QM-Siliconharze, lineare oder cyclische Siloxane einer Viskosität von 0,65 bis zu mehreren Millionen mm²/s, polyethermodifizierte Polysiloxane, Fettalkohole, Fettsäureamide, Wachse, Aluminiumoxide, Aluminiumsilikate, Titanoxide, Kieselsäuren, Mineralöle, fette Öle, Fettsäuren, Tenside, enthalten. Diese Zusätze können auch bereits in der verwendeten Entschäumerformulierung enthalten sein.

Die linearen und/oder verzweigten Vinylpolymere (C) können in Form einer wässrigen Lösung oder wässrigen Dispersion eingesetzt werden. Üblicherweise werden dabei 20 bis 1.000 Gew.-Teile Wasser pro 1 Gew.- Teil Vinylpolymer (C) verwendet. Die Vinylpolymere (C) können ebenso in Form von Lösungen in Mischungen von Wasser mit Cosolventien, wie z. B. Diethylenglykolmonobutylether, oder Tensiden eingesetzt werden. Letztere Mischungen haben den Vorteil, Lösungen mit höheren Konzentrationen an Vinylpolymere (C) einsetzen zu können. Das Wasser wird in jedem Fall nach Herstellung der Entschäumerpulver wieder abgetrennt.

Die Herstellung der erfindungsgemäßen Entschäumerpulver kann beispielsweise dadurch erfolgen, daß Entschäumerformulierung (A) und pulverförmiges Trägermaterial (B) gemischt und anschließend oder gleichzeitig eine Lösung oder Dispersion eines linearen und/oder vernetzten Vinylpolymere (C) und gegebenenfalls weitere Zusätze eingearbeitet werden. Alternativ ist es ebenfalls möglich, eine Emulsion oder Dispersion der Entschäumerformulierung (A) in einer Lösung oder Dispersion eines linearen und/oder verzweigten Vinylpolymeren (C), gegebenenfalls mit weiteren Zusätzen, in bekannter Weise herzustellen und in diese anschließend pulverförmiges Trägermaterial (B) und gegebenenfalls weitere Zusätze einzuarbeiten. Die nach dem Mischen erhaltene pulverförmige Masse kann bei Bedarf noch getrocknet werden, so daß letztendlich ein rieselfähiges Pulver erhalten wird. Die Trocknung kann dabei unmittelbar sowohl im Mischer als auch nachfolgend in einem separaten Trockner bekannter Bauart, z.B. einem Bandtrockner, erfolgen.

Zur Herstellung der erfindungsgemäßen Entschäumerpulver können verschiedene bekannte Mischer verwendet werden, die vorzugsweise heizbar und/oder evakuierbar sind, um die Trocknung im selben Aggregat zu ermöglichen. Beispiele für geeignete Mischer sind Pflugscharmischer, Z-Mischer, Schneckenextruder oder Planetenmischer. Der technologisch bedingte Restwassergehalt des erfindungsgemäßen Entschäumerpulvers liegt unter 10 Gew.-%, vorzugsweise unter 5 Gew.-%.

Eine weitere Variante zur Herstellung der erfindungsgemäßen Entschäumerpulver ist die Anwendung von bekannten Sprühtrocknungsverfahren. In einem solchen Verfahren wird z.B. eine Mischung von Entschäumerformulierung (A), einem linearen und/oder verzweigten Vinylpolymer (C) und Wasser auf das Trägermaterial (B) aufgesprüht und getrocknet. Durch den Zusatz von Rieselhilfsmitteln, wie z. B. hydrophile Kieselsäure, kann die Rieselfähigkeit der erfindungsgemäß hergestellten Entschäumerpulver verbessert werden.

Vorzugsweise finden die erfindungsgemäßen rieselfähigen Entschäumerpulver ihre Anwendung in Wasch- und Reinigungsmitteln. Sie können jedoch überall eingesetzt werden, wo Schaum bekämpft oder verhindert werden soll. Ein Beispiel dafür sind pulverförmige Pflanzenschutzmittel, insbesondere solche, die größere Mengen an oberflächenaktiven Verbindungen enthalten. Die erfindungsgemäßen Entschäumerpulver können aber auch in chemischen Prozessen oder bei der Abwasserbehandlung vorteilhaft verwendet werden. Die Dosierung der erfindungsgemäßen Entschäumerpulver erfolgt durch einfaches Mischen z. B. mit dem Waschmittel. Dies wird vorteilhaft zu dem Zeitpunkt durchgeführt, an dem das Grundwaschmittel mit anderen, ebenfalls pulverförmigen Bestandteilen, wie z.B. Enzymen, Bleichmitteln, gemischt wird. Es ist jedoch auch möglich das erfindungsgemäße Entschäumerpulver direkt in das schäumende Medium zu dosieren.

Eine pharmazeutische Anwendung kann in Antiflatulenzpräparaten erfolgen, insbesondere in solchen, die zusätzlich Antacidika enthalten. Durch die Verwendung der erfindungsgemäßen Entschäumerpulver wird die sonst in solchen Formulierungen leicht auftretende Desaktivierung des Entschäumers verhindert.

Die erfindungsgemäßen Entschäumerpulver enthalten neben den üblichen Bestandteilen, Entschäumerformulierung und Trägermaterial, nur relativ geringe Mengen an linearen und/oder verzweigten Vinylpolymeren und weisen dadurch eine hervorragende Lagerstabilität auf. Sie sind insbesondere in Wasch- und Reinigungsmitteln mit Erfolg einsetzbar.

### Ausführungsbeispiele

Die linearen und/oder verzweigten Vinylpolymeren wurden in allen Ausführungsbeispielen in Form wässriger Lösungen eingesetzt.

### Polymerlösung 1

Als Verbindung der allgemeinen Formel (I) wurde ein hochmolekulares Copolymer aus Acrylsäure, Methacrylsäurestearat und Pentaerythritoldiallylether (im Verhältnis 100:2:0,3) verwendet, dessen neutralisierte 2%-ige wäßrige Lösung eine Viskosität von 17.500 mm²/s aufwies. Für die Herstellung der Entschäumerpulver wurde eine 2%-ige unneutralisierte Lösung verwendet.

### Polymerlösung 2

Es wurde ein Copolymer eingesetzt, dessen neutralisierte 2%-ige wäßrige Lösung eine Viskosität von 8.200 mm²/s aufwies und das durch Copolymerisation von Acrylsäure mit einem C₁₄₋₁₈-alkylmethacrylsäureester und Pentaerythritoldiallylether (im Verhältnis 100:3:0,4) hergestellt wurde. Für die Herstellung der Entschäumerpulver wurde eine 2%-ige unneutralisierte Lösung verwendet

### Polymerlösung 3

Es wurde ein Copolymer eingesetzt, dessen neutralisierte 2%ige wäßrige Lösung eine Viskosität von 3.150 mm²/s aufwies und das durch Polymerisation von Acrylsäure mit einem Laurylmethacrylat und Pentaerythritoltriacrylat (im Verhältnis 100:4:0,1) hergestellt wurde. Für die Herstellung der Entschäumerpulver wurde eine 2%ige unneutralisierte Lösung verwendet

### Entschäumerformulierung A

100 Gew.-Teile eines α-ωPolydimethylsiloxandiols mit einer Vis-kosität von 70 mm²/s bei 25 °C, 20 Gew.-Teile eines trimethylsiloxyterminierten Polydiorganosiloxans mit einer Vis-kosität von 50 mm²/s bei 25 °C und 0,9 Gew.-Teile Tetraethylsilikat wurden in Gegenwart von 20 ppm KOH als Equilibrierungskatalysator bei einer Temperatur von 140 °C umgesetzt. Nach Beendigung der Umsetzung und Abkühlen des erhaltenen Polydimethylsiloxans wurde mit 5 Gew.-teilen einer hydrophobierten Fällungskieselsäure mit einer BET-Oberfläche von 90 m²/g gemischt. Die erhaltene Entschäumerformulierung wies eine Viskosität von 36.000 mm²/s auf.

### Entschäumerformulierung B

Ein Polydimethylsiloxan mit einer Viskosität von 350 mm²/s wurde mit 12 Gew.-Teilen einer hydrophobierten Fällungskieselsäure mit einer BET-Oberfläche von 90 m²/g vermischt. Die erhaltene Entschäumerformulierung wies eine Viskosität von 3.700 mm²/s auf.

### Entschäumerformulierung C

Eine Entschäumerformulierung wurde durch Mischen von 90 Gew.-% Paraffinöl mit 8 Gew.-% einer hydrophobierten pyrogenen Kieselsäure und 2 Gew.-% Glycerolmonostearat bei 75 °C hergestellt. Die Entschäumerformulierung hatte eine Viskosität von 1.600 mm²/s.

### Beispiel A1

35 ml der Polymerlösung 1 wurden in einem Becherglas vorgelegt und unter intensivem Mischen mit einem Flügelrührer wurden 10 g Entschäumerformulierung A langsam zugegeben, so daß nach 10 Minuten Rühren eine Emulsion der Entschäumerformulierung in der Polymerlösung vorlag. Unter fortgesetztem Rühren wurden zu dieser Emulsion 88,5 g leichte Soda gegeben und anschließend das Wasser unter fortgesetztem Mischen unter Vakuum entfernt. Danach wurden 0,5 g einer hydrophilen Kieselsäure mit einer BET-Oberfläche von 200 m²/g zugemischt.
Es wurde ein weißes, rieselfähiges Pulver erhalten.

### Beispiel A2

87 g Saccharose wurden vorgelegt und 10 g der Entschäumerformulierung B darin verteilt. Zu dieser Mischung wurden 50 ml Polymerlösung 2 zugemischt und anschließend überschüssiges Wasser unter fortgesetztem Mischen unter Vakuum entfernt. Danach wurden 2 g einer hydrophilen Kieselsäure mit einer BET-Oberfläche von 200 m²/g zugemischt.
Es wurde ein weißes, rieselfähiges Pulver erhalten.

### Beispiel A3

87 g leichte kalzinierte Soda wurden vorgelegt und 10 g der Entschäumerformulierung B darin verteilt. Zu dieser Mischung wurden 50 ml Polymerlösung 3 zugemischt und anschließend überschüssiges Wasser unter fortgesetztem Mischen unter Vakuum entfernt. Danach wurden 2 g einer hydrophilen Kieselsäure mit einer BET-Oberfläche von 200 m²/g zugemischt.
Es wurde ein weißes, rieselfähiges Pulver erhalten.

### Beispiel A4

8,7 g kristalline Soda wurden vorgelegt und 1 g der Entschäumerformulierung B verteilt. Nachfolgend wurden 6 ml Polymerlösung 1 zugemischt und anschließend überschüssiges Wasser unter fortgesetztem Mischen unter Vakuum entfernt. Danach wurden 0,1 g einer hydrophilen Kieselsäure mit einer BET-Oberfläche von 200 m²/g zugemischt.
Es wurde ein weißes, rieselfähiges Pulver erhalten.

### Beispiel A5

8,8 g Saccharose wurden mit 3 g der Entschäumerformulierung C gründlich gemischt. Nachfolgend wurden 5 ml Polymerlösung 1 zugemischt und anschließend überschüssiges Wasser unter fortgesetztem Mischen unter Vakuum entfernt. Danach wurden 0,1 g einer hydrophilen Kieselsäure mit einer BET-Oberfläche von 200 m²/g zugemischt.
Es wurde ein weißes, rieselfähiges Pulver erhalten.

### Beispiel A6

Aus 75 ml der Polymerlösung 1 und 10 g Entschäumerformulierung A wurde wie im Beispiel A1 beschrieben eine Emulsion der Entschäumerformulierung hergestellt. Unter fortgesetztem Rühren wurden zu dieser Emulsion 88,5 g handelsübliches Zeolith gegeben und anschließend überschüssiges Wasser unter fortgesetztem Mischen unter Vakuum entfernt. Danach wurden 0,5 g einer hydrophilen Kieselsäure mit einer BET-Oberfläche von 150 m²/g zugemischt.
Es wurde ein weißes, rieselfähiges Pulver erhalten.

### Beispiel A7

8,7 g einer fein granulierten technischen Natrium-Carboxymethylcellulose, dadurch charakterisiert, daß eine Lösung von 5% dieser Natrium-Carboxymethylcellulose in Wasser bei 20 °C eine Viskosität von 1500 mm²/s aufwies, wurden mit 1 g der Entschäumerformulierung B gründlich gemischt. Nachfolgend wurden 4 ml Polymerlösung 3 zugemischt und anschließend überschüssiges Wasser unter fortgesetztem Mischen unter Vakuum entfernt. Danach wurden 0,2 g einer hydrophilen Kieselsäure mit einer BET-Oberfläche von 200 m²/g zugemischt.
Es wurde ein rieselfähiges Pulver erhalten.

### Vergleichsbeispiele

### Vergleichbeispiel V1

8,5 g kristallines Natriumsulfat wurden mit 1,5 g der Entschäumerformulierung B intensiv gemischt. Es wurde ein weißes, leicht klebriges Pulver erhalten.

### Vergleichsbeispiel V2

8,5 g Saccharose wurden mit 1,5 g der Entschäumerformulierung B intensiv gemischt. Es wurde ein weißes, leicht klebriges Pulver erhalten.

### Vergleichsbeispiel V3

8,5 g Saccharose wurden mit 1 g der Entschäumerformulierung B intensiv gemischt. Nachfolgend wurden 0,7 ml einer wäßrigen 42%-igen Lösung eines handelsüblichen Acrylsäure-Maleinsäure-Copolymers mit einem Molgewicht von ca. 30.000 g/mol zugemischt und anschließend überschüssiges Wasser unter fortgesetztem Mischen unter Vakuum entfernt. Nach Entfernung des überschüssigen Wassers wurden 0,2 g einer hydrophilen Kieselsäure mit einer BET-Oberfläche von 200 m²/g zugemischt.
Es wurde ein weißes, rieselfähiges Pulver erhalten.

### Prüfung der Entschäumer als Waschpulverzusatz

Die erhaltenen Entschäumerpulver wurden in solchen Mengen in ein handelsübliches, aber entschäumerfreies Waschpulver eingebracht und vermischt, daß das Waschpulver einen Aktivgehalt von 0,2 Gew.-% der Entschäumerformulierung A bzw. 0,4 Gew.-% der Entschäumerformulierungen B bzw. C enthielt.
Die Prüfung der Entschäumer erfolgte sofort nach Herstellung und nach 90 Tagen Lagerung bei Raumtemperatur.
Die durch Lösen in Wasser hergestellten Waschlaugen wiesen bei Zusatz der erfindungsgemäßen Entschäumerpulver keine erhöhte kinematische Viskosität im Vergleich zu Waschlaugen auf, die durch Auflösen von entschäumerfreiem Waschmittel erhalten wurden.

### Test A

4 g des entschäumerhaltigen Waschpulvers wurden in 400 ml entionisiertem Wasser gelöst und in einem Becherglas auf einer Heizplatte 30 min bei 600 min⁻¹ mit einem Käfigrührer gerührt. Dabei stieg die Temperatur von 25 °C auf 60 °C an. Die Höhe des gebildeten Schaums wurde mit einem Schaumhöhenmessgerät der Fa. Datentechnik Ing. Franz Raab in Intervallen von 10 Sekunden gemessen. Aus den Messwerten wurde vom Gerät ein Schaumhöhenintegral, H_{E}, über die Gesamtzeit errechnet, das die Menge des während des Tests gebildeten Schaums widerspiegelte.

Der Grad der Entschäumung, der ein Maß für die Wirksamkeit des Entschäumers darstellt, wurde wie folgt berechnet:

E (in%) = (H_{A}-H_{E})/H_{A}*100

Dabei bedeutet H_{A} das Schaumhöhenintegral, das bei einem Vergleichsversuch mit dem Waschpulver ohne Entschäumer ermittelt wurde.

Tabelle 1 enthält den Grad der Entschäumung für die eingesetzten Entschäumerpulver.

**Tabelle 1**

| Beispiel | Entschäumung in % sofort nach Herstellung | Entschäumung in % nach 90 d Lagerung |
|---|---|---|
| A1 | 87 | 86 |
| A2 | 84 | 85 |
| A3 | 93 | 90 |
| A4 | 82 | 78 |
| A5 | 72 | 65 |
| A6 | 78 | 76 |
| A7 | 91 | 87 |
| V1 | 44 | 0 |
| V2 | 87 | 3 |
| V3 | 93 | 41 |

Die Überlegenheit und Wirksamkeit auch nach längerer Lagerzeit der erfindungsgemäßen Entschäumerpulver ist offensichtlich.

### Test B

Einige der erhaltenen Entschäumerpulver wurden in ein handelsübliches, aber entschäumerfreies Waschpulver eingebracht und gemischt, so daß das Waschpulver einen Aktivgehalt von 0,1 Gew.-% der Entschäumerformulierung A enthielt.
100 g des so erhaltenen Waschpulvers wurden zur Testung in eine automatische Frontlader-Waschmaschine (Miele WS 5425 MC13, 60 °C Waschgang mit 1 kg Trockenwäsche) gegeben und die Schaumhöhen zu ausgewählten Zeiten nach Programmstart gemessen. Zur Messung wurde die Türhöhe in 10 gleiche Inkremente eingeteilt. Dabei bedeutet *0* kein Schaum und *10* die vollständige Füllung der Maschine mit Schaum. Zum Vergleich wurde ebenfalls eine Messung der Schaumhöhen ohne Entschäumerzusatz durchgeführt.

Die Ergebnisse sind in Tabelle 2 dargestellt.

**Tabelle 2**

| Beispiel | nach 14 min | nach 16 min | nach 18 min | nach 30 min |
|---|---|---|---|---|
| ohne Zusatz | 9,5 | 10,0 | 10,0 | 8,5 |
| A1 | 0,5 | 0,5 | 1,0 | 1,5 |
| A6 | 0,5 | 1,5 | 1,0 | 1,5 |

Die Wirksamkeit der erfindungsgemäßen Entschäumerpulver ist offensichtlich.

## Patentansprüche

1. Entschäumerpulver, enthaltend mindestens
(A) 2 bis 30 Gew.-Teile einer Entschäumerformulierung, bestehend aus mindestens einem in Wasser unlöslichem Entschäumeröl und mindestens einem Füllstoff,
(B) 50 bis 100 Gew.-Teile mindestens eines pulverförmigem Trägermaterials sowie
(C) 0,1 bis 30 Gew.-Teile
mindestens eines linearen Vinylpolymers der allgemeinen Formel
R¹-(CR₂-CR₂)ₙ-R¹ (I),
worin R¹ unabhängig voneinander entweder Wasserstoff oder ein durch thermische oder photochemische Startreaktionen aus dem Initiator gebildetes Startradikal darstellt und R ausgewählt ist aus Wasserstoff, Kohlenwasserstoffresten mit 1 bis 30 Kohlenstoffatomen, Carboxylgruppen oder deren Salzen, Gruppierungen der allgemeinen Formel
-C(O)-O-R² (II),
-C(O)-N-R³ ₂ (III),
-O-C(O)-R² (IV),
oder zwei benachbarte Kohlenstoffatome verbindende Gruppierungen der allgemeinen Formel
-C(O)-O-C(O)- (V)
oder
-C(O)-NR³-C(O)- (VI),
wobei R² einen Kohlenwasserstoffrest mit 1 bis 30 Kohlenstoffatomen darstellt und R³ entweder Wasserstoff oder R² bedeutet, mit der Maßgabe, dass mindestens 5 Mol.-% der Reste R Carboxylgruppen oder deren Salze und mindestens 0,1 Mol.-% der Reste R Kohlenwasserstoffreste mit mehr als 8 Kohlenstoffatomen oder Gruppierungen der allgemeinen Formel (II), (III) oder (IV) sind, bei denen R² einen Kohlenwasserstoffrest mit mehr als 8 Kohlenstoffatomen darstellt, wobei n einen Wert zwischen 10 und 100.000 annimmt,
und/oder
mindestens eines verzweigten Vinylpolymeren, dessen lineare Ketten der allgemeinen Formel (I) entsprechen, die über den Einbau von Vinylmonomeren, welche mindestens 2 ungesättigte, radikalisch polymerisierbare Gruppen tragen, verknüpft sind.

2. Entschäumerpulver nach Anspruch 1, dadurch gekennzeichnet, dass als lineares Vinylpolymer (C) mindestens eine Verbindung der allgemeinen Formel (I) eingesetzt wird, worin als Reste R
20 bis 40 Mol.-% Carboxylgruppen oder deren Salze,
0,1 bis 10 Mol.-% Reste der Formel (II) mit der Maßgabe, dass R² Alkylreste mit 10 bis 30 Kohlenstoffatomen darstellt,
bis zu 25 Mol.-% Methylgruppen und
mehr als 50 Mol.-% Wasserstoff gebunden sind
sowie n einen Wert zwischen 5.000 und 50.000 annimmt.

3. Entschäumerpulver nach Anspruch 1, dadurch gekennzeichnet, dass als lineares Vinylpolymer (C) mindestens eine Verbindung der allgemeinen Formel (I) eingesetzt wird, worin als Reste R
24 bis 30 Mol.-% Carboxylgruppen oder deren Salze sind,
0,1 bis 1,5 Mol.-% Reste der Formel (II) mit der Maßgabe, dass R² Alkylreste mit 1 bis 18 Kohlenstoffatomen darstellt,
bis zu 25 Mol.-% Methylgruppen und
mehr als 50 Mol.-% Wasserstoff gebunden sind
sowie n einen Wert zwischen 5.000 und 50.000 annimmt.

4. Entschäumerpulver nach Anspruch 1, dadurch gekennzeichnet, dass als verzweigtes Vinylpolymer (C) mindestens eine Verbindung eingesetzt wird, in welcher die linearen Ketten der allgemeinen Formel (I) entsprechen und durch den Einbau von Monomeren, ausgewählt aus Allylethern, Acrylestern und/oder Methacrylestern mehrwertiger Alkohole, verknüpft sind.

5. Entschäumerpulver nach Anspruch 1, dadurch gekennzeichnet, dass als verzweigtes Vinylpolymer (C) mindestens eine Verbindung eingesetzt wird, in welcher die linearen Ketten der allgemeinen Formel (I) entsprechen und durch den Einbau von Monomeren, ausgewählt aus Allylethern, Acrylestern und/oder Methacrylestern von Kohlenhydraten, verknüpft sind.

6. Entschäumerpulver nach Anspruch 1, dadurch gekennzeichnet, dass als verzweigtes Vinylpolymer (C) mindestens eine Verbindung eingesetzt wird, in welcher die linearen Ketten der allgemeinen Formel (I) durch den Einbau von Monomeren der allgemeinen Formel
(R⁴OCH₂)₃CR⁵ (VII)
verknüpft sind, wobei R⁴ Wasserstoff und/oder eine Gruppierung -CH₂CH=CH₂, -C(O)-CH=CH₂ und/oder -C(O)-C(CH₃)=CH₂ darstellt und R⁵ entweder einen Kohlenwasserstoffrest mit 1 bis 4 Kohlenstoffen oder eine Gruppierung -CH₂OR⁴, mit der Maßgabe bedeutet, dass mindestens zwei ungesättigte Gruppen pro Verbindung der allgemeinen Formel (VII) enthalten sind.

7. Entschäumerpulver nach Anspruch 1, dadurch gekennzeichnet, daß 5 bis 20 Teile Vinylpolymer (C) je 100 Teile Entschäumerformulierung enthalten sind.

8. Entschäumerpulver nach Anspruch 1, dadurch gekennzeichnet, daß als Entschäumerformulierung (A) eine Mischung aus 85 bis 99 Gew.-% linearen und/oder verzweigten Organopolysiloxanen mit einer kinematischen Viskosität von 100 bis 1.000.000 mm²/s und 1 bis 15 Gew.-% einer vorbehandelten und/oder in situ hydrophobierten Kieselsäure mit einer BET Oberfläche größer 50 m²/g verwendet wird.

9. Entschäumerpulver nach Anspruch 1, dadurch gekennzeichnet, daß in der Entschäumerformulierung (A) als Entschäumeröl ein Polymer und/oder Copolymer auf Basis von Diorganopolysiloxanen, ein Mineralöl, eine Fettsäure und deren Derivate, ein langkettiger Alkohol oder ein Ethylenoxid-Propylenoxid-Blockcopolymer oder deren Mischungen Verwendung finden.

10. Entschäumerpulver nach Anspruch 1, dadurch gekennzeichnet, daß als Trägermaterial (B) wasserlösliche und/oder wasserdispergierbare, organische und/oder anorganische pulverförmige Substanzen verwendet werden.

11. Verwendung der Entschäumerpulver nach Anspruch 1 in Wasch- und Reinigungsmitteln.

12. Verwendung der Entschäumerpulver nach Anspruch 1 in Pflanzenschutzmitteln.
